(19) Europäisches Patentamt
European Patent Office
Office européen des brevets

(11) **EP 2 450 415 B1**

(12) **EUROPEAN PATENT SPECIFICATION**

(45) Date of publication and mention
of the grant of the patent:
**06.06.2018 Bulletin 2018/23**

(51) Int Cl.:
***C09J 7/00*** *(2018.01)*

(21) Application number: **11187775.9**

(22) Date of filing: **04.11.2011**

(54) **Pressure-sensitive adhesive sheet**

Haftklebefolie

Feuille adhésive sensible à la pression

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2010 JP 2010247771**

(43) Date of publication of application:
**09.05.2012 Bulletin 2012/19**

(73) Proprietor: **Nitto Denko Corporation
Ibaraki-shi, Osaka 567-8680 (JP)**

(72) Inventors:
• **Yamamoto, Kenichi
Ibaraki-shi, Osaka 567-8680 (JP)**
• **Takahashi, Akiko
Ibaraki-shi, Osaka 567-8680 (JP)**
• **Ootake, Hironao
Ibaraki-shi, Osaka 567-8680 (JP)**
• **Funatsu, Eriko
Ibaraki-shi, Osaka 567-8680 (JP)**

(74) Representative: **Grünecker Patent- und
Rechtsanwälte
PartG mbB
Leopoldstraße 4
80802 München (DE)**

(56) References cited:
**EP-A1- 1 486 548     EP-A1- 1 580 245
EP-A1- 1 865 041     JP-A- 2006 348 143**

**Description**

CROSS-REFERENCE

The present application claims priority based on Japanese Patent Application No. 2010-247771 filed on November 4, 2010, the contents of which are incorporated herein in its entirety by reference.

BACKGROUND OF THE INVENTION

1. Field of the Invention

The present invention relates to a pressure-sensitive adhesive (PSA) sheet having a PSA layer formed from a water-dispersed PSA composition in which an acrylic polymer is dispersed in an aqueous solvent.

2. Description of the Related Art

Compared to a PSA composition in the form of a PSA constituent dispersed in an organic solvent (solvent-type PSA composition), a PSA composition containing as a PSA constituent an acrylic polymer in an aqueous medium (for instance, an emulsion-type PSA composition in which a PSA constituent is dispersed in an aqueous medium) is desirable in terms of environmental health since water is used as the dispersion medium. Therefore, a PSA sheet using an aqueous PSA composition is being used in a variety of field as a two-sided PSA tape and in other morphologies. As technical references regarding water-dispersed acrylic PSA, Japanese Patent Application Publication Nos. 2006-348143, 2007-84781 and 2008-115315 may be cited.

SUMMARY OF THE INVENTION

However, compared to a PSA sheet using a solvent-type PSA composition, a PSA sheet using an aqueous PSA composition is prone to having insufficient adhesive properties towards adherends such as foams having microscopic irregularities (due mainly to air cavities) on the surface (rough-surfaced adhesion property). In particular, unlike hard adherends, with a foam having elasticity (hereinafter referred to as "elastic foam") such as polyurethane foam (in particular flexible urethane foam), since the force for pressure-bonding a PSA sheet thereto is absorbed by the elastic deformation of the foam, pressure-bonding a PSA sheet to the elastic foam firmly, *per se*, is difficult. In addition, if a PSA sheet is strongly pressed against an elastic foam, the foam becomes strongly compressed (crushed), which can cause damages to the foam. In addition, depending on the strength or shape of the structure supporting the reverse side of the elastic foam, compressing the elastic foam between the tape and the structure sufficiently and without irregularities is difficult.
Thusly, when attempting to pressure-bond a PSA sheet to an elastic foam firmly, the bonding workability of the PSA sheet is prone to decreasing as extra force is needed to compress the elastic foam, the work demands caution, and the like. In addition, when the emphasis is on bonding workability, the adhesion reliability of the PSA sheet is prone to being insufficient. Elastic foams such as flexible urethane foams are being used broadly as a cushioning material or the like, for instance, in automobile interiors or inside household electric products, in a form that uses a two-sided PSA sheet for immobilizing to a desired location (adherend), or bonds a single-sided PSA sheet having the elastic foam as a substrate. If the adhesion reliability of the PSA sheet is insufficient in such usage forms, an issue may arise, that the elastic foam peels-off. This is one factor that prevents a switch from PSA compositions of the solvent type to aqueous PSA compositions.
The present invention was devised in view of such considerations, the main object thereof being to provide a PSA sheet comprising a PSA layer formed from an aqueous PSA composition and having adequate bonding workability with respect to elastic foams. Another, related object is to provide an aqueous PSA composition that is useful in producing such a PSA sheet and in other applications.
The PSA sheet provided by the present invention has a PSA layer formed from an aqueous PSA composition. The PSA composition is a dispersion solution containing an aqueous solvent and an acrylic polymer dispersed in the aqueous solvent. The PSA sheet satisfies the following property (A). That is to say, (A) when the PSA sheet has been pressure-bonded to a flexible urethane foam of 10 mm in thickness under conditions where the urethane foam is compressed to a thickness of 5 mm, the 180° peel adhesive strength (hereinafter also referred to as "light pressure-bonding adhesive strength") 30 minutes after the pressure-bonding is 1.5 N/20 mm or greater. Here, ECS (gray), a product from Inoac Corporation, is used as the flexible urethane foam; wherein the pressure-sensitive adhesive composition further contains a tackifier L in an amount of 5 parts by mass or more with respect to 100 parts by mass of the acrylic polymer satisfying the following properties: (p) the viscosity at 30°C is 2000 Pa-s or lower; and (q) the hydroxyl group value is 50 mg KOH/g or greater. Such a PSA sheet, even when being bonded to an adherend with a poor adhesive property such as elastic foams by being lightly (in other words, without strongly crushing the elastic foam) pressure-bonded to the adherend, may exert satisfactory adhesive property (adhesion reliability) to the adherend. Consequently, bonding workability with respect to adherends (for instance elastic foams) may be remarkably improved. In addition, since the PSA sheet is provided with a PSA layer formed from an aqueous PSA composition it is desirable in terms of environmental health.

In addition, in a PSA sheet that may be used in an application in which an elastic foam such as a polyurethane foam and an adherend are bonded, the capability may sometimes be sought of elastically deforming the foam following the surface shape (may be a curved surface, a stepped surface, or the like) of the adherend and retaining the foam in the elastically deformed shape against the resilience of the foam tending to revert to the original shape (that is to say, the capability of resisting the repulsion of the foam; hereinafter also referred to as "repulsion resistance"). Possessing such a repulsion resistance is also desirable in a single-sided PSA sheet having such a foam sheet as the substrate (support).

According to one preferred mode of the PSA sheet disclosed herein, the PSA sheet further satisfies the following property (B). That is to say, (B) a lift distance is 2 mm or less in a repulsion resistance test carried out by the following method: using a 10 mm-wide, 50 mm-long PSA sheet backed with a flexible urethane foam of 10 mm in thickness (ECS (gray), a product from Inoac Corporation, is used) as a sample strip, pressure-bonding a portion of the sample strip from one end thereof in a length direction up to 10 mm, against an outer edge on a first side of a 2 mm-thick acrylonitrile-butadiene-styrene co-polymer resin plate (ABS plate) by causing a 2 kg roller to travel back and forth once, folding and pressure-bonding a remaining portion of the sample strip from an end of the ABS plate over to a second side thereof, storing the resulting for 24 hours under an environment of 23°C and 50% RH followed by 2 hours under an environment of 70°C, and measuring the lift distance from the surface of the ABS plate for the one end in the length direction of the sample strip. A PSA sheet with excellent repulsion resistance in this way is useful as a PSA sheet (typically, a two-sided PSA sheet) that may be used in an application for bonding an elastic foam and an adherend, a single-sided PSA sheet having a foam sheet as a substrate (support), or the like.

It is desirable that the PSA sheet further satisfies the following property (C): a retention time is one hour or longer in a cohesive strength test in which the PSA sheet is bonded to a phenol resin plate by an adhesive surface area of 10 mm in width and 20 mm in length, a load of 500 g is applied in a parallel direction to this adhesive surface and the resulting is held under an environment of 23°C. Since a PSA sheet that satisfies property (C) in addition to property (A) (and furthermore, property (B), preferably) demonstrates excellent PSA properties, it is suitable in applications for bonding an elastic foam to another adherend, and various other applications.

In addition to an aqueous solvent and an acrylic polymer dispersed in the aqueous solvent (water-dispersed acrylic polymer), the PSA composition further contains a tackifier L that satisfies the following properties: (p) the viscosity at 30°C is 2000 Pa·s or lower; and (q) the hydroxyl group value is 50 mg KOH/g or greater. A PSA sheet that uses such a PSA composition (typically, a PSA sheet provided with a PSA layer formed from the PSA composition) may have excellent light pressure-bonding property (adhesive property when bonding was by lightly pressure-bonding to the adherend) (property (A)). In addition, it may further excel in one or both of repulsion resistance (property (B)) and cohesive strength (property (C)).

In one preferred mode, the PSA composition further contains a tackifier resin (tackifying resin) H which softening point is 60°C or higher. According to a PSA sheet using such a PSA composition, a PSA sheet demonstrating more satisfactory PSA properties (for instance, a PSA sheet with one, two or more properties further improved among the properties (A) to (C)) may be realized.

In addition, according to the present invention, a method for preparing a PSA composition comprising a dispersion solution containing an aqueous solvent and an acrylic polymer dispersed in the aqueous solvent is provided. This method comprises preparing a dispersion solution in which an acrylic polymer is dispersed in an aqueous solvent (water-dispersed acrylic polymer). In addition, it comprises mixing in the dispersion solution, a tackifier L satisfying the following properties: (p) the viscosity at 30°C is 2000 Pa·s or lower; and (q) the hydroxyl group value is 50 mg KOH/g or greater. According to the PSA composition prepared by such a method, a PSA sheet may be prepared, which demonstrates an excellent light pressure-bonding property towards adherends with poor adhesive properties such as elastic foams. Consequently, the preparation method may be adopted preferably as a method for preparing a PSA composition used to prepare any of the PSA sheets disclosed herein.

According to one mode of the PSA composition preparation method disclosed herein, when mixing the tackifier L into the dispersion solution, the tackifier L is added to the dispersion solution while the temperature of the tackifier L is 35°C or higher. According to such a mode, the tackifier L can be readily and appropriately mixed by adding the tackifier L in an as-is morphology (for instance, without having to prepare a water dispersion solution of the tackifier L beforehand, or diluting the tackifier L with an organic solvent) to the dispersion solution.

BRIEF DESCRIPTION OF THE DRAWINGS

Fig. 1 is a cross-sectional view showing schematically one constitution example of the PSA sheet;
Fig. 2 is a cross-sectional view showing schematically another constitution example of the PSA sheet;
Fig. 3 is a cross-sectional view showing schematically another constitution example of the PSA sheet;
Fig. 4 is a cross-sectional view showing schematically another constitution example of the PSA sheet;
Fig. 5 is a cross-sectional view showing schematically another constitution example of the PSA sheet;
Fig. 6 is a cross-sectional view showing schematically another constitution example of the PSA sheet;
Fig. 7 is an explanatory figure showing a method for measuring light pressure-bonding adhesive strength against an urethane foam;
Fig. 8 is an explanatory figure showing a method for measuring light pressure-bonding adhesive strength against an urethane foam;
Fig. 9 is an explanatory figure showing a method for repulsion resistance test; and
Fig. 10 is an explanatory figure showing a method for repulsion resistance test.

DETAILED DESCRIPTION OF THE INVENTION

In the following, preferred embodiments of the present invention will be described. Note that something that is other than the matters expressly referred to herein, which is something that is necessary to carry out the present invention, may be understood to be a design matter of a person of ordinary skill in the art, based on prior art in the relevant field. The present invention can be carried out based on the contents disclosed herein and the technical knowledge in the relevant field. In addition, in the following description, like reference numerals are assigned to members or sites producing like effects, and duplicated descriptions are sometimes omitted or simplified.

The PSA sheet provided by the present invention comprises a PSA layer formed from a PSA composition disclosed herein. A substrated PSA sheet of a morphology having such a PSA layer on one side or on each side of the substrate (support) is adequate, as is a substrate-less PSA sheet of a morphology in which the PSA layer described above is retained by a release liner (may be understood as being a substrate having a release side), or the like. The concept of PSA sheet herein includes those referred to as adhesive tape, adhesive label, adhesive film and the like. Note that, although the PSA layer described above is typically formed continuously, it is not limited to such a morphology, and the PSA layer may be formed in a regular or random pattern of, for instance, dots, stripes or the like. In addition, the PSA sheet provided by the present invention may be in roll form or in sheet form. Alternatively, the PSA sheet may be of morphologies that have been further processed into a variety of shapes.

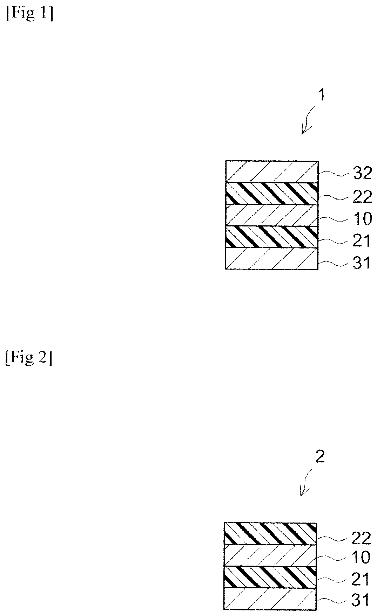

The PSA sheet disclosed herein may have cross-sectional structures, for instance, shown schematically in Fig. 1 to Fig. 6. Among these, Fig. 1 and Fig. 2 are constitution examples of substrated PSA sheets of the double-sided adhesive type. The PSA sheet 1 shown in Fig. 1 has a constitution in which PSA layers 21 and 22 are provided on each side of a substrate 10 (both non-releasing) and these PSA layers are respectively protected by release liners 31 and 32, of which at least the PSA layer side is a release side. The PSA sheet 2 shown in Fig. 2 has a constitution in which PSA layers 21 and 22 are provided on each side of a substrate 10 (both non-releasing), the PSA layer 21, which is the first among these, is protected by a release liner 31, of which each side is a release side. This type of PSA sheet 2 can have a constitution in which the PSA layer 22 is also protected by the release liner 31, by rolling the PSA sheet and bringing the second PSA layer 22 in contact with the back side of the release liner 31.

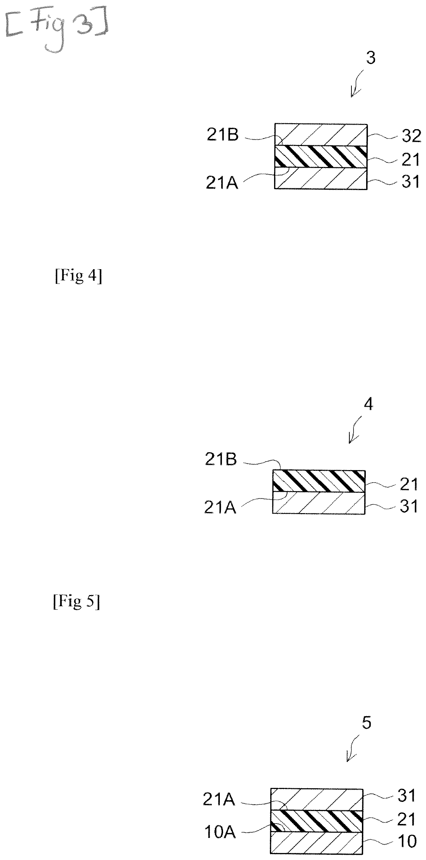

Fig. 3 and Fig. 4 are constitution examples of a substrate-less two-sided PSA sheet. The PSA sheet 3 shown in Fig. 3 has a constitution in which both sides 21A and 21B of a substrate-less PSA layer 21 are protected respectively by release liners 31 and 32, of which at least the PSA layer side is a release side. The PSA sheet 4 shown in Fig. 4 has a constitution in which a first surface (adhesive surface) 21A of the substrate-less PSA layer 21 is protected by a release liner 31, of which each side is a release side, and when this is rolled, a second surface (adhesive surface) 21B of the PSA layer 21 comes in contact with the back side of the release liner 31, allowing for a constitution in which the second side 21B is also protected with the release liner 31.

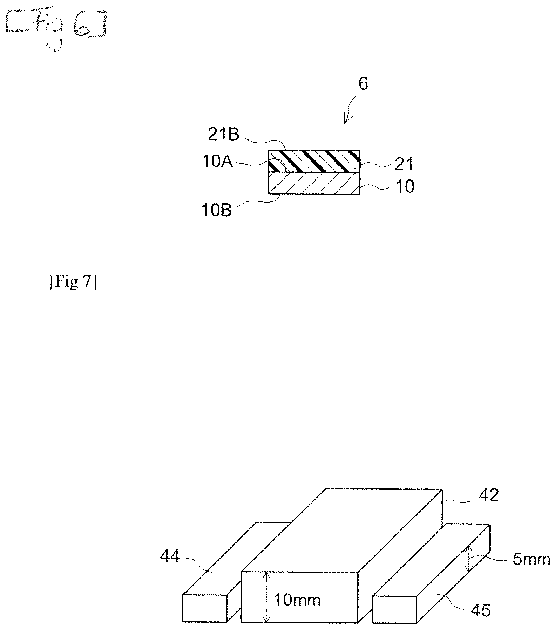

Fig. 5 and Fig. 6 are constitution examples of a substrated PSA sheet of the single-sided PSA type. The PSA sheet 5 shown in Fig. 5 has a constitution in which a PSA layer 21 is provided on a first side 10A (non-releasing) of a substrate 10, a surface (adhesive surface) 21A of this PSA layer 21 is protected with a release liner 31 of which at least the PSA layer side is a release side. The PSA sheet 6 shown in Fig. 6 has a constitution in which a PSA layer 21 is provided on a first side 10A (non-releasing) of a substrate 10. The second side 10B of the substrate 10 is a release side, and when the PSA sheet 6 is rolled, the PSA layer 21 comes into contact with the second side 10B, protecting the surface (adhesive surface) 21B of the PSA layer with the second side 10B.

As substrate for supporting (backing) the PSA layer in a substrated PSA sheet of the single-sided PSA type or of the two-sided PSA type, various resin films (polyolefin film, polyester film and the like), papers (Japanese paper, premium paper and the like), fabrics such as woven fabric and non-woven fabric from a single or blend or the like of various fibrous substances, rubber sheets (natural rubber sheet and the like), foam sheets comprising foams such as foam polychloroprene rubber (foam polyurethane sheet and the like), metal foils (aluminum foil and the like), composites thereof, and the like, can be used. The substrate may have a monolayer morphology, or may have a layered morphology. While the thickness of the substrate can be selected suitably according to the purpose, it is generally 10 $\mu$m to 500 $\mu$m (preferably 10 $\mu$m to 200 $\mu$m). From the point of view of repulsion resistance, the use of a substrate with a thickness of 10 $\mu$m to 50 $\mu$m is advantageous.

The art disclosed herein may be applied particularly preferably to substrate-less or substrated PSA sheet of the two-sided PSA type (for instance, a two-sided PSA sheet that may be used in an application for bonding an elastic foam such as soft polyurethane and an adherend). As preferred substrates in substrated two-sided PSA sheets, non-woven fabrics well known or commonly used in the field of PSA sheets of such morphology can be used preferably. For instance, non-woven fabrics constituted from natural fibers such as wood pulp, cotton and fiber (for instance, Manila fiber); non-woven fabrics constituted from chemical fibers (synthetic fibers) such as polyester fiber, rayon, vinylon, acetate fiber, polyvinyl alcohol (PVA) fiber, polyamide fiber, polyolefin fiber and polyurethane fiber; non-woven fabrics constituted by using two or more species of fibers of different materials in combination; and the like, can be used. Note that "non-woven fabric" referred to herein is a concept indicating non-woven fabrics for PSA sheet used in the field of PSA tapes and other PSA sheets mainly and refers to non-woven fabrics such as those prepared using a generic paper machine (may also be referred to as so-called "papers").

The thickness of the PSA layer may be for instance on the order of 5 $\mu$m to 200 $\mu$m (preferably 10 $\mu$m to 100 $\mu$m). In the case of a two-sided PSA sheet in which a PSA layer is provided on both sides of a substrate, the thickness of the PSA layer as referred to herein refers to the thickness of the PSA layer per one side thereof. With a PSA sheet that may be bonded to an elastic foam such as soft polyurethane to be used, it is advantageous that the thickness of the PSA layer to be bonded to the foam is 30 $\mu$m or greater (preferably 40 $\mu$m or greater) in order to obtain a satisfactory light pressure-bonding adhesive strength against the foam. On the other hand, from the point of view of the balance with other PSA physical properties, PSA sheet productivity, and the like, the thickness of the PSA layer is preferably 100 $\mu$m or less. One preferred mode of the PSA sheet disclosed herein is a PSA sheet in which the thickness of the PSA layer is 40 $\mu$m to 80 $\mu$m (typically 50 $\mu$m to 70 $\mu$m; for instance, around 60 $\mu$m), and which satisfies the above property (A) (and furthermore, one or both of the properties (B) and (C) preferably). For instance, it may be a two-sided PSA sheet comprising a PSA layer with the above thickness on both sides of a non-woven fabric, a substrate-less two-sided PSA sheet comprising a PSA layer with the above thickness, a single-sided PSA sheet having a PSA layer with the above thickness on one side of a substrate, or the like.

Release liners that are well known or commonly used in the field of PSA sheet can be suitably selected and used. For instance, release liners can be used suitably, having a constitution in which a release treatment has been performed as necessary on the surface of substrates comprising various resin films, papers, fabrics, rubber sheets, foam sheets, metal foils, composites thereof (for instance, layered structure sheet comprising an olefin resin laminated on both sides of a paper), and the like.

The PSA sheet disclosed herein satisfies the property (A). That is to say, when the PSA sheet has been pressure-bonded to a flexible urethane foam that has a thickness of 10 mm in a free state (a state in which no external force is applied) under conditions where the urethane foam is compressed to a thickness of 5 mm (in other words, a condition where the flexible urethane foam is compressed to a thickness of 50%), the 180° peel adhesive strength (light pressure-bonding adhesive strength) 30 minutes after the pressure-bonding is 1.5 N/20 mm or greater. ECS (gray), a product from Inoac Corporation (herein after may be referred simply to as "ECS foam"), is used as the flexible urethane foam. This ECS foam is a polyether urethane foam with a density of 22 $\pm$ 2 kg·m$^3$ and a hardness (by the D method defined in JIS K6400-2 (2004)) of 107.9 $\pm$ 22.6 N.

The light pressure-bonding adhesive strength can be measured more concretely in the following manner. First, a PSA sheet that is targeted for performance evaluation is cut into a band of a given width (typically a strip) to prepare a sample strip. At this time, if the PSA sheet has the morphology of a substrate-less or substrated two-sided PSA sheet, an adequate backing material is preferably bonded beforehand on one adhesive surface for the purpose of handleability improvement and PSA sheet reinforcement. As the backing material, for instance, a polyethylene terephthalate (PET) film with a thickness of on the order of 20 $\mu$m to 30 $\mu$m (typically 25 $\mu$m) can be preferably adopted. While the width of the sample strip (width of the adhesive surface) is in general preferably 20 mm, even when a sample strip with a different width of X mm is used, multiplying 20/X to the measurement result obtained using the sample strip allows the measurement result thereof to be converted into adhesive strength per 20 mm width. In the following description, it is deemed that 20 mm-wide sample strips are used. It suffices that the length of the sample strip is set in such a way that a sufficient bonding length against the adherend may be secured. In general, setting the bonding length (length of the adhesive surface) to 20 mm or greater is adequate, and setting to 50 mm or greater is more desirable.

An ECS foam of 10 mm in thickness, 30 mm in width and 100 mm in length is used as the adherend. In general, an ECS foam sheet of 10 mm in thickness having a larger (broader) surface area cut into a band of the above size can be used preferably as the adherend.

The sample strip is bonded to an ECS foam of 10 mm in thickness serving as the adherend under an environment of 23°C in such a way that the adherend is compressed to a thickness of 5 mm. At this time, in order to prevent the adherend from being compressed excessively or the compression from being insufficient, it is adequate to place 5 mm-thick jigs in the periphery of the adherend. For instance, as shown in Fig. 7, it is adequate to place 5 mm-thick rod-shaped (square beam) jigs 44 and 45 by leaving slight gaps on both sides in the width direction of an adherend 42. Although the materials of the jigs 44 and 45 are not limited in particular, harder materials than the adherend 42 are preferably used. The operation of pressure-bonding a sample strip under the conditions in which the adherend is compressed to a thickness of 5 mm can be preferably performed, for instance, by opposing the surface of the adherend and the adhesive surface of the sample strip and pressing (pushing) the reverse side of the sample strip against the adherend typically using a suitable member until the member abuts the top side of the jigs.

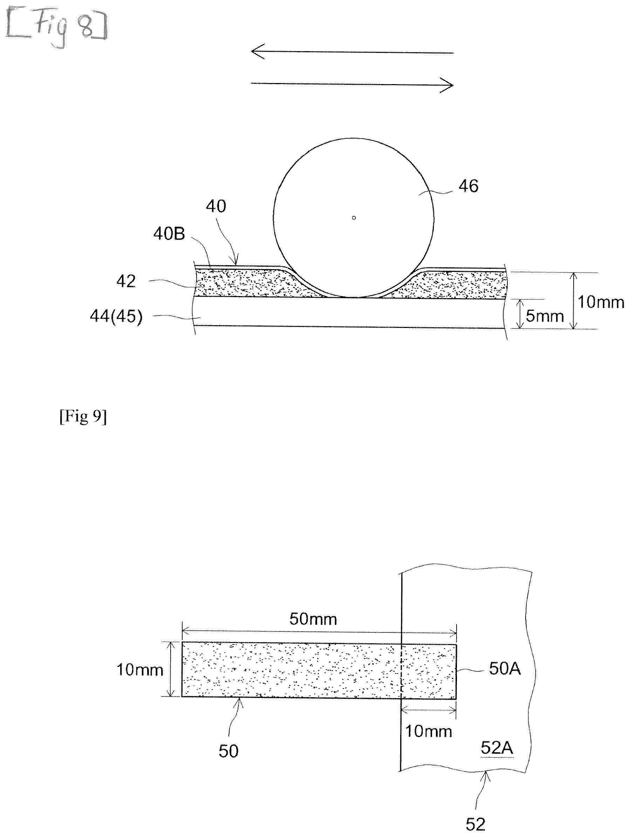

In order to uniformize the pressure-bonding strength, a member having a cylindrical contour can be preferably adopted as the member for pressing the sample strip from the reverse side against the adherend. As an adequate example of pressing member, a cylindrical member with a diameter of on the order of 80 mm to 90 mm (for instance 85 mm) may be given. Such a member is preferably caused to travel once back and forth on the reverse side of the sample strip along the length direction of the sample strip at a speed of 30 cm/minute (traveling speed of the member, that is to say, the traveling speed of the cylinder axis). For instance, rolling a cylindrical roller 46 along the top side of the jigs 44 and 45 is adequate, as shown in Fig. 8. The weight of the roller 46 or the load applied by the roller 46 is set to a weight that may compress the adherend 42 until the lower end of the roller 46 abuts against the upper ends of the jigs 44 and 45. For instance, a roller weighing on the order of 2 kg can be used preferably as the roller 46.

The sample strip bonded to the adherend in this manner is stored under an environment at 23°C for 30 minutes from the pressure-bonding, and then, 180° peel adhesive strength is measured in a measurement environment of 23°C and 50% RH, under the condition of 300 mm/minute pull speed, in accordance with JIS Z 0237 (2004). This measurement can be carried out using a commercially available tensile tester. The measurement length (peel length) is preferably 10 mm or greater and more preferably 20 mm or greater. It is desirable to carry out the measurements twice or more (and more preferably, three times or more) using different sample strips and adopt the mean value of the measurement results thereof. According to a preferred mode of the PSA sheet disclosed herein, the light pressure-bonding adhesive strength is 1.8 N/20 mm or greater (and more preferably, 2.5 N/20 mm or greater). While the upper limit of light pressure-bonding adhesive strength is not limited in particular, when the strength of the ECS foam *per se* is considered, it is generally 10 N/20 mm or less. Note that in the case of a peeling state in which the PSA sheet is not peeled at the boundary surface with the adherend but a portion of the adherend is peeled off from the remainder along with the PSA sheet immediately after the beginning of the peeling or in the middle of the peeling, the light pressure-bonding adhesive strength can be inferred to be at least 1.5 N/20 mm or greater.

According to one preferred mode of the PSA sheet disclosed herein, the PSA sheet further satisfies property (B). That is to say, the lift distance is 2 mm or less in a repulsion resistance test comprising using a 10 mm-wide, 50 mm-long PSA sheet backed with an ECS foam of 10 mm in thickness as a sample strip, pressure-bonding a portion of the sample strip from one end thereof in a length direction up to 10 mm against a 2 mm-thick ABS plate, folding and pressure-bonding the remaining portion of the sample from the end of the ABS plate over to a second side thereof, storing the resulting for 24 hours under an environment of 23°C and 50% RH followed by 2 hours under an environment of 70°C, and then measuring the distance by which the one end in the length direction of the sample strip has lifted from the ABS plate surface (lift distance).

The repulsion resistance test can be performed more concretely, for instance in the following manner. First, an ECS foam of 10 mm in thickness is bonded against the reverse side of a PSA sheet (the side that is on the opposite side from the adhesive surface that is targeted for performance evaluation). If the PSA sheet has the morphology of a substrate-less or substrated two-sided PSA sheet, it suffices to pressure-bond the ECS foam against the adhesive surface that is on the opposite side from the adhesive surface that is targeted for performance evaluation. If the PSA sheet has the morphology of a single-sided PSA sheet, it is adequate to secure the ECS foam onto the reverse side of the PSA sheet using a suitable two-sided PSA tape (for instance, a two-sided PSA tape from Nitto Denko Corporation; product name: No. 512). This ECS foam-backed PSA sheet is cut into a 10 mm-wide, 50 mm-long strip to prepare a sample strip.

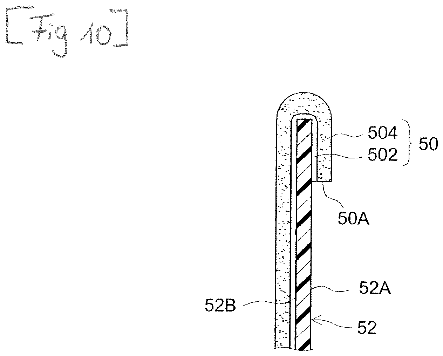

At 23°C, a portion of the adhesive surface of a sample strip 50 from one end 50A in the length direction up to 10 mm (that is to say, an adhesive surface area of 10 mm in width and 10 mm in length) is bonded against a first side 52A of a 2 mm-thick ABS plate 52, as shown in Fig. 9. At this time, the sample strip 50 is arranged in such a way that the position of the sample strip 50 up to 10 mm from the one end 50A is aligned with an outer peripheral end of the ABS plate 52 and the remaining portion of the sample strip 50 extends vertically from the ABS plate 52 in the outer direction. The bonding is carried out under conditions where a roller having a diameter of 90 mm to 100 mm (for instance 95 mm) and weighing 2 kg is caused to travel this portion once back and forth at a speed of approximately 30 cm/minute. Then, the remaining portion of the sample strip 50 (width: 10 mm; length: 40 mm) is folded and bonded from the end of the ABS plate 52 over to a second side 52B thereof, as shown in Fig. 10.

This is left alone for 24 hours under an environment of 23°C and 50% RH and further left alone for 2 hours under an environment of 70°C, then, the height by which the one end 50A of the sample strip 50 has lifted from the surface 52A of the ABS plate 52 (lift distance; mm) is measured on the side of the first side 52A (the side where the adhesive surface area is 10 mm in width and 10 mm in length). In Fig. 10, numeral 502 represents a PSA sheet, and numeral 504 represents a urethane foam pressure-bonded to the first adhesive surface of the PSA sheet. It is desirable to carry out this repulsion resistance test using two or more (and more preferably three or more) different sample strips and adopt the mean value of the lift distances thereof as the test result. In a preferred mode of the PSA sheet disclosed herein, the lift distance is 1 mm or less and more preferably 0 mm (that is to say, no lifting from the ABS plate is observed).

According to one preferred mode of the PSA sheet disclosed herein, the PSA sheet further satisfies property (C). That is to say, the retention time is one hour or longer in a cohesive strength test in which the PSA sheet is bonded to a phenol resin plate by an adhesive surface area of 10 mm in width and 20 mm in length, a load of 500 g is applied in a parallel direction to this adhesive surface and the resulting is held under an environment of 23°C. This cohesive strength test can be performed preferably for instance by the method described in the example described later. This cohesive strength test is carried out using two or more (and more preferably three or more) different sample strips, and if even one sample strip is dropped within an hour, the determination is insufficient cohesive strength (retention time is less than one hour). A PSA sheet for which a sample strip still retained to the phenol resin plate after one hour in the retention test with the shift width after one hour (mean value from all the sample strips) being 5 mm or less one hour later is desirable, and a PSA sheet with 3 mm or less (for instance 2 mm or less) is more preferable.

Next, the PSA layer of the PSA sheet disclosed herein will be described in more detail. This PSA layer is formed using an acrylic water-dispersed PSA composition. The PSA composition is a dispersion solution containing an aqueous solvent and an acrylic polymer dispersed in the aqueous solvent. The acrylic polymer preferably occupies 40% by mass or more (typically 40% by mass to 95% by mass) among the non-volatile components contained in the PSA composition (PSA layer forming constituents; hereafter may also be called "PSA"), and more preferably occupies 50% by mass or more (typically 50% by mass to 90% by mass, for instance 55% by mass to 85% by mass). In addition, the proportion by mass of acrylic polymer occupied within the PSA is typically 95% by mass or lower, and in general 90% by mass or lower (for instance 85% by mass or lower) is desirable. If the proportion by mass of acrylic polymer occupied within the PSA is excessive or insufficient, PSA properties may readily become unbalanced.

An acrylic polymer having an alkyl (meth)acrylate as the main constitutive monomer constituent (monomer main component, that is to say, a constituent occupying 50% by mass or more, typically 50% by mass to 99.8% by mass, of the total amount of monomer constituting an acrylic polymer (hereafter may be referred to as "all monomer constituents")) may be preferably adopted. In one preferred mode, the content ratio of this alkyl (meth)acrylate is 70% by mass or more (typically, 70% by mass to 99.5% by mass) of all monomer constituents, and for instance 80% by mass or more (typically, 80% by mass to 99.5% by mass). In addition, the content ratio of the alkyl (meth)acrylate may be 90% by mass or more (typically, 90% by mass to 99% by mass) of all monomer constituents. Such an acrylic polymer may be synthesized by polymerization (typically, emulsion polymerization) of a given monomer raw material. In general, the monomer composition in the monomer raw material corresponds approximately to the co-polymerization composition (co-polymeric ratio) of an acrylic polymer obtained by polymerizing the monomer raw material.

Note that herein, "(meth)acrylate" is meant to indicate acrylate and methacrylate comprehensively. Similarly, meant to indicate comprehensively are, respectively, "(meth)acryloyl" for acryloyl and methacryloyl, and "(meth)acrylic" for acrylic and methacrylic.

One, two or more species selected from (meth)acrylic acid esters of alkyl alcohols with 1 to 20 carbon atoms (hereafter, such ranges of carbon atom numbers may be represented by $C_{1-20}$) can be used suitably as alkyl (meth)acrylate. In one preferred mode, 70% by mass or more (typically, 70% by mass to 99.5% by mass) of all monomer constituents is $C_{1-14}$ alkyl (meth)acrylate, for instance $C_{1-10}$ alkyl (meth)acrylate. As concrete examples of $C_{1-10}$ alkyl (meth)acrylate, methyl (meth)acrylate, ethyl (meth)acrylate, n-propyl (meth)acrylate, isopropyl (meth)acrylate, n-butyl (meth)acrylate, isobutyl (meth)acrylate, s-butyl (meth)acrylate, t-butyl (meth)acrylate, n-pentyl (meth)acrylate, isoamyl (meth)acrylate, neopentyl (meth)acrylate, n-hexyl (meth)acrylate, n-heptyl (meth)acrylate, n-octyl (meth)acrylate, isooctyl (meth)acrylate, 2-ethylhexyl (meth)acrylate, n-nonyl (meth)acrylate, isononyl (meth)acrylate, n-decyl (meth)acrylate, isodecyl (meth)acrylate, and the like, may be given. For instance, a monomer composition can be preferably adopted, containing one or both of butyl acrylate (BA) and 2-ethylhexyl acrylate (2EHA) for a total of 40% by mass or more (typically, 40% by mass to 98% by mass) of all monomer constituents, and more preferably 50% by mass or more (typically, 50% by mass to 95% by mass). When BA and 2EHA are used in combination as alkyl (meth)acrylate, there is no particular limitation on their ratio.

Other monomers that are co-polymerizable with alkyl (meth)acrylate (hereafter also referred to as "co-polymerizing monomer") may be used as optional constituents in the acrylic polymer. For instance, ethylenic unsaturated monomers having one, two or more species of functional group selected from a carboxyl group, an alkoxy silyl group, a hydroxyl group, an amino group, an amide group, an epoxy group and the like, can be used. These functional group-containing monomers may be useful for introducing a crosslinking point into an acrylic polymer. The type of co-polymerizing monomer and the content ratio thereof (co-polymeric ratio) can be set suitably by taking into account the type of the crosslinking agent used and the amount thereof, the type of the crosslinking reaction, the desired extent of crosslinking (crosslinking density), and the like.

Among such functional group-containing monomers, one, two or more species selected from monomers having a carboxyl group or acid anhydrides thereof can be used preferably. As concrete examples of carboxyl group-containing monomers, ethylenic unsaturated monocarboxylic acids such as acrylic acid (AA), methacrylic acid (MAA) and crotonic acid, ethylenic unsaturated dicarboxylic acids such as maleic acid, itaconic acid and citraconic acid, anhydrides of ethylenic unsaturated dicarboxylic acids such as anhydrous maleic acid and anhydrous itaconic acid, and the like, may be cited. Essentially all functional group-containing monomer constituents may be carboxyl group-containing monomers. As preferred carboxyl group-containing monomers among them, AA and MAA can be indicated as examples. One of these may be used alone, or, AA and MAA may be combined in an arbitrary ratio and used.

According to one preferred mode of the art disclosed herein, AA and MAA are co-polymerized in the acrylic polymer. According to a PSA composition containing an acrylic polymer having such a co-polymerization composition, a PSA sheet having even better repulsion resistance may be realized. The mass ratio between AA and MAA (AA:MAA) can be for instance in a range of approximately 1:10 to 10:1, and in general a range of approximately 1: 4 to 4:1 (for instance 1:2 to 2:1) is desirable. When co-polymerizing a carboxyl group-containing monomer, the co-polymerization amount thereof (if several species of carboxyl group-containing monomers are used, the total amount thereof) can be on the order of for instance 0.5% by mass to 15% by mass of all monomer constituents, and in general on the order of 1% by mass to 10% by mass (preferably 2% by mass to 6% by mass, for instance 3% by mass to 5% by mass) is adequate.

As other examples of functional group-containing monomers that may be preferably used, monomers having an alkoxy silyl group may be cited. As concrete examples of such alkoxy silyl group-containing monomers, 3-(meth)acryloxypropyl trimethoxy silane, 3-(meth)acryloxypropyl triethoxy silane, 3-(meth)acryloxypropyl methyl dimethoxy silane, 3-(meth)acryloxypropyl methyl diethoxy silane, and the like, may be cited. Co-polymerizing such alkoxy silyl group-containing monomers may become a technique that is advantageous in terms of realizing a PSA sheet that can provide both light pressure-bonding adhesiveness and cohesive strength at higher levels. When co-polymerizing an alkoxy silyl group-containing monomer, the co-polymerization amount thereof can be on the order of 0.005% by mass to 0.05% by mass (for instance 0.01% by mass to 0.03% by mass) of all monomer constituents. According to one preferred mode of the art disclosed herein, at least an alkoxy silyl group-containing monomer, AA and MAA are co-polymerized as the functional group-containing monomers in the acrylic polymer. The acrylic polymer may substantially comprise alkyl (meth)acrylate, an alkoxy silyl group-containing monomer, AA and MAA only.

Generally, the functional group-containing monomer is preferably used in a range of 15% by mass or less (for instance 0.5% by mass to 15% by mass, and preferably 1% by mass to 10% by mass) among all monomer constituents. If the amount of functional group-containing monomer constituent used is excessive, the cohesive strength becomes excessively high and PSA properties (for instance adhesive strength) may tend to decrease.

As other examples of monomers that may be co-polymerized in the acrylic polymer (co-polymerizing monomer), vinyl esters such as vinyl acetate and vinyl propionate, aromatic vinyl compounds such as styrene and $\alpha$-methyl styrene, nonaromatic ring-containing (meth)acrylates such as cyclohexyl (meth)acrylate and isobornyl (meth)acrylate, aromatic ring-containing (meth)acrylates such as phenyl (meth)acrylate and benzyl (meth)acrylate, alkoxy group-containing monomers such as methoxyethyl (meth)acrylate and ethoxyethyl (meth)acrylate, vinyl ethers such as methylvinyl ether, ethylvinyl ether, and the like, may be cited. As further other examples, multi-functional monomers having a plurality of polymerizing functional groups within a single molecule, for instance, ethyleneglycol di(meth)acrylate, pentaerythritol di(meth)acrylate, trimethylolpropane tri(meth)acrylate, pentaerythritol tri(meth)acrylate, dipentaerythritol hexa (meth)acrylate, and the like, may be cited. Alternatively, such multi-functional monomers may not have to be used substantially.

The monomer composition of the acrylic polymer is preferably determined in such a way that the glass transition temperature (Tg) thereof is in the interval of -70°C to -10°C (typically, -60°C to -20°C). If Tg is excessively high, the light pressure-bonding adhesiveness towards elastic foam is prone to being insufficient. On the other hand, if Tg is excessively low, repulsion resistance or cohesive strength tend to become readily insufficient. Here, the Tg of an acrylic polymer refers to the value determined by the formula of FOX based on the Tg the homopolymer of each monomer constituting the acrylic polymer and the mass fraction of the monomer (co-polymeric ratio). Values given in the well-known materials "Handbook of Pressure-Sensitive Adhesive Technology" from The Nikkan Kogyo Shimbun, Ltd. or "Polymer Handbook" from Wiley-Interscience are adopted as the Tg of a homopolymer. For instance, adopted are - 70°C for 2EHA, -54°C for BA, 8°C for methyl acrylate (MA), 105°C for methyl methacrylate, 66°C for cyclohexyl methacrylate, 32°C for vinyl acetate, 106°C for AA and 228°C for MAA.

As methods for obtaining water dispersion solution of acrylic polymers by polymerizing such monomers, polymerization methods that are well known or in common use can be adopted, and preferably emulsion polymerization can be used. As methods for supplying monomers when carrying out emulsion polymerization, batch feeding method whereby the entirety of the monomers is supplied in a single batch, continuous supply (instillation) method, fractional provision (instillation) method, and the like, can be adopted suitably. A portion or the entirety of the monomers (typically, the entirety) is mixed and emulsified beforehand with water (typically, a suitable amount of emulsifier is used along with water), and the emulsion thereof (monomer emulsion) may be supplied into the reaction vessel in a single batch, gradually or fractionally. The polymerization temperature can be selected suitably according to the species of the monomer, the species of the polymerization initiator, and the like, to be used, and can be, for instance, on the order of 20°C to 100°C (typically 40°C to 80°C).

As polymerization initiators used during polymerization, it can be selected suitably according to the type of polymerization method from among polymerization initiators that are well known or in common use. For instance, in emulsion polymerization methods, azo series polymerization initiators may be used preferably. Examples of azo initiators include 2,2'-azobisisobutylonitrile, 2,2'-azobis(2-methylpropionamidine) disulfate, 2,2'-azobis(2-amidino propane) dihydrochloride, 2,2'-azobis[2-(5-methyl-2-imidazoline-2-yl)propane] dihydrochloride, 2,2'-azobis($N,N'$-dimethyleneisobutylamidine), 2,2'-azobis[$N$-(2-carboxyethyl)-2-methylpropionamidine] hydrate, 2.2'-azobis(4-methoxy-2,4-dimethylvaleronitrile), 2,2'-azobis(2,4-dimethylvaleronitrile), 2,2'-azobis(2-methylbutylonitrile), 1,1'-azobis(cyclohexane-1-carbonitrile), 2,2'-azobis(2,4,4-trimethylpentane), dimethyl-2,2'-azobis(2-methylpropionate), and the like.

As other examples of polymerization initiator, persulfates such as potassium persulfate and ammonium persulfate; peroxide initiators such as benzoyl peroxide, t-butyl hydroperoxide, di-t-butyl peroxide, t-butylperoxy benzoate, dicumyl peroxide, 1,1-bis(t-butylperoxy)-3,3,5-trimethyl cyclohexane, 1,1-bis(t-butylperoxy)cyclododecane and hydrogen peroxide; and the like, may be cited. As further other examples of polymerization initiators, redox initiators by combination of a peroxide and a reducing agent may be cited. Examples of such redox initiators include combination of a peroxide (such as hydrogen peroxide) and ascorbic acid (such as combination of hydrogen peroxide water and ascorbic acid), combination of a persulfate and sodium hydrogen sulfite, and the like.

Such polymerization initiators can be used alone or in a combination of two species or more. The amount of polymerization initiator used suffices to be an amount used conventionally, and can be selected from a range of, for instance, on the order of 0.005 parts in mass to 1 parts in mass (typically 0.01 parts in mass to 1 parts in mass) with respect to 100 parts in mass of all monomers combined.

Various conventionally well-known chain transfer agents (may be also understood as molecular weight adjuster or polymerization degree adjuster) can be used in the polymerization, as necessary. Such a chain transfer agent may be one, two or more species selected from mercaptans such as for instance, n-lauryl mercaptan, glycidyl mercaptan and 2-mercaptoethanol. Among them, the use of n-lauryl mercaptan is desirable. The amount of chain transfer agent used can be, for instance, on the order of approximately 0.001 parts by mass to 0.5 parts by mass with respect to 100 parts by mass of monomer raw material. This usage amount may be on the order of approximately 0.02 parts by mass to 0.05 parts by mass.

With emulsion polymerization thus carried out, a polymerization reaction mixture is obtained in the form of an emulsion in which an acrylic polymer is dispersed in water. As the water-dispersed acrylic polymer in the art disclosed herein, this polymerization reaction mixture or the reaction mixture after a suitable work-up can be used preferably. Alternatively, a polymerization method other than the emulsion polymerization method (for instance, solution polymerization, photopolymerization, bulk polymerization, and the like) may be used to synthesize the acrylic polymer, and use a water-dispersed acrylic polymer prepared by dispersing this polymer in water.

Regarding preparation of the water-dispersed acrylic polymer, an emulsifier can be used as necessary. As emulsifiers, any of anionic, non-ionic and cationic ones can be used. In general, the use of an anionic or non-ionic emulsifier is preferred. Such emulsifiers can be used preferably, for instance, when a monomer raw material is to be emulsion-polymerized, when an acrylic polymer obtained by another method is to be dispersed in water, and the like. As anionic emulsifiers, for example, sodium lauryl sulfate, ammonium lauryl sulfate, dodecylbenzene sulfonate, sodium polyoxyethylene alkyl ether sulfate, polyoxyethylene alkyl phenyl ether ammonium sulfate, sodium polyoxyethylene alkyl phenyl ether sulfate, and the like, may be given. As non-ionic emulsifiers, for example, polyoxyethylene alkyl ether, polyoxyethylene alkyl phenyl ether, and the like, may be given. In addition, radical polymerizing emulsifiers (reactive emulsifiers) having structures comprising a radical polymerizing group (a propenyl group or the like) introduced into these anionic or non-ionic emulsifiers may be used. Alternatively, only emulsifiers containing no such radical polymerizing group may be used.

Such emulsifiers can be used as one species alone or by combining two or more species. It suffices that the amount of emulsifier used is a usage amount allowing an acrylic polymer to be prepared in the form of an emulsion, which is not limited in particular. In general, selection from a range of, for instance, on the order of 0.2 parts by mass to 10 parts by mass (preferably 0.5 parts by mass to 5 parts by mass) based on solid contents per 100 parts by mass of acrylic polymer is adequate.

According to one preferred mode of the art disclosed herein, in addition to a water-dispersed acrylic polymer, the PSA composition further contains a tackifier (liquid tackifier) L that satisfies the following properties: being liquid at 30°C and the hydroxyl group value being 50 mg KOH/g or greater. Here, being liquid at 30°C, means that the viscosity at 30°C is 2000 Pa·s or lower (typically, 10 Pa·s to 2000 Pa·s). From the point of view of ease of PSA composition preparation (for instance, ease of mixing into water-dispersed acrylic polymer), a viscosity at 30°C of 1700 Pa·s or lower is more desirable.

It is possible to adopt as values for this viscosity the values measured for a tackifier L substantially comprising only non-volatile components (that is to say, not dissolved with an organic solvent in order to decrease the viscosity nor prepared in the form of a water dispersion solution; typically, the amount of non-volatile components being 95% by mass to 100% by mass), using a commercial B-type viscometer with the conditions: rotor No. 7, rotation speed of 2 rpm, liquid temperature of 30°C and measurement time of 1 minute.

In addition, values measured by the potentiometric titration method as defined in JIS-K0070 (1992) can be adopted as the values for the hydroxyl group value. The concrete measurement method is as indicated below:

[Hydroxyl group value measurement method]

1. Reagents

1) Approximately 12.5 g (approximately 11.8 ml) of anhydrous acetic acid is weighed, pyridine is added thereto so as to reach 50 ml in total volume, which is stirred thoroughly and used as acetylation reagent. Alternatively, approximately 25 g (approximately 23.5 ml) of anhydrous acetic acid is weighed, pyridine is added thereto so as to reach 100 mL in total volume, which is stirred thoroughly and used.
2) A solution of 0.5 mol/l potassium hydroxide in ethanol is used as the measurement reagent.
3) In addition, toluene, pyridine, ethanol and distilled water are prepared.

2. Operation

1) A flat-bottomed flask is used to collect approximately 2 g of sample by weighing precisely, added with 5 ml of acetylation reagent and 10 ml of pyridine, and fitted with an air cooling tube.
2) The flask is heated in a bath at 100°C for 70 minutes and then cooled in air; from the upper portion of the cooling tube, 35 ml of toluene is added as solvent and stirred, then, 1 ml of distilled water is added and stirred to decompose the anhydrous acetic acid. To complete decomposition, heating in the bath for 10 minutes and then cooling in air were performed again.
3) The cooling tube is washed with 5 ml of ethanol and taken out. Next, 50 ml of pyridine is added as solvent and stirred.
4) A transfer pipette is used to add 25 mL of a solution of 0.5 mol/l potassium hydroxide in ethanol.
5) Potentiometric titration is carried out with the solution of 0.5 mol/l potassium hydroxide in ethanol. The inflection point of the obtained titration curve serves as the end point.
6) For the blank test, 1) to 5) above are carried out without introducing a sample.

3. Calculation

The hydroxyl group value is calculated according to the following formula:

$$\text{Hydroxyl group value (mg KOH/g)} = [(B-C) \times f \times 28.05]/S + D$$

where:

B: volume (ml) of solution of 0.5 mol/l potassium hydroxide in ethanol used for blank test,
C: volume (ml) of solution of 0.5 mol/l potassium hydroxide in ethanol used in the sample,
f: a factor of the solution of 0.5 mol/l potassium hydroxide in ethanol,
S: sample mass (g),
D: acid number, and
28.05: 1/2 of the molecular weight of potassium hydroxide 56.11.

Values measured by the potentiometric titration method as defined in JIS-K0070 (1992) are adopted as values for the acid number. The concrete measurement method is as indicated below:

[Acid number measurement method]

1. Reagents

1) Diethyl ether and ethanol are mixed and stirred at a volume ratio of 4:1, which is used as solvent.
2) A solution of 0.1 mol/l potassium hydroxide in ethanol is used as measurement reagent.
3) A phenolphthalein solution is used as an indicator.

2. Operation

1) A few drops of phenolphthalein solution are added to the solvent, which is neutralized with a solution of 0.1 mol/l potassium hydroxide in ethanol.
2) Approximately 5 g of sample is collected in a beaker by weighing precisely, 50 ml of solvent neutralized in 1) is added, and dissolved completely by stirring above a panel heater (80°C).
3) Potentiometric titration is carried out with the solution of 0.1 mol/l potassium hydroxide in ethanol. The inflection point of the obtained titration curve serves as the end point.

3. Calculation

The acid number is calculated according to the following formula.

$$\text{Acid number (mg KOH/g)} = (B \times f \times 5.611)/S$$

where:

B: volume (ml) of solution of 0.1 mol/l potassium hydroxide in ethanol used in the sample,
f: a factor for the solution of 0.1 mol/l potassium hydroxide in ethanol,
S: sample mass (g),
D: acid number, and
5.611: 1/10 of the molecular weight of potassium hydroxide 56.11.

Mixing a tackifier L that satisfies such properties allows the light pressure-bonding adhesiveness towards elastic foams (for instance flexible urethane foam) to be improved remarkably without significantly impairing the balance with other PSA properties. In order to realize a higher light pressure-bonding adhesiveness, a tackifier L with a hydroxyl group value of 65 mg KOH/g or greater is preferably used. A tackifier L with a hydroxyl group value of 100 mg KOH/g or greater (furthermore, 150 mg KOH/g or greater; for instance 200 mg KOH/g or greater) may also be used. Generally, if the hydroxyl group value of a tackifier becomes higher, the viscosity at 30°C of the tackifier tends to increase. In the art disclosed herein, using a tackifier L with an as high as possible hydroxyl group value in a range where the viscosity at 30°C becomes 2000 Pa·s or lower (more preferably 1700 Pa·s or lower) the effect of improving light pressure-bonding adhesiveness may be exerted better. Although the upper limit of the hydroxyl group value is not limited in particular, considering the viscosity described above, in general, those with a hydroxyl group value of 500 mg KOH/g or lower (for instance 300 mg KOH/g or lower) may be used preferably.

The tackifier L can use a variety of materials that fit such viscosity and hydroxyl group value properties, alone or by combining suitably two or more species. For instance, such materials as from the rosin series, the terpene series, the hydrocarbon series and the elastomer series may be used as the tackifier L. As tackifiers from the rosin series, rosin esters (for instance, esterification products of non-modified rosin; esterification products of modified rosin such as hydrogenated rosin and disproportionated rosin) or the like can be given as examples. As tackifiers from the terpene series, terpene resin, terpene phenol resin comprising the terpene resin modified with phenol, and the like, may be given as examples. As tackifiers from the hydrocarbon series, aliphatic hydrocarbon resin, aromatic hydrocarbon resin (xylene resin or the like), hydrogenated hydrocarbon resin, coumarone resin, coumarone indene resin, and the like, can be given as examples. As tackifiers from the elastomer series, acrylic oligomer, urethane oligomer, and the like, can be given as examples. While not to be limited in particular, the molecular weight of the tackifier L is preferably 10,000 or lower, in general 5,000 or lower (for instance 3,000 or lower, and furthermore 500 or lower) being desirable.

As examples of tackifier L that are desirable to the art disclosed herein, rosin esters, terpene phenol resins and acrylic oligomers may be cited. Among them, rosin esters and terpene phenol resins are desirable. As particularly desirable tackifiers L, terpene phenol resins with hydroxyl group values of 150 mg KOH/g or greater (typically, 150 mg KOH/g to 300 mg KOH/g) may be cited.

The amount of tackifier L used can be for instance 5 parts by mass or more with respect to 100 parts by mass of acrylic polymer, and in general, satisfactory effects are obtained with 10 parts by mass or more (for instance 15 parts by mass or more). From the point of view of balance with other PSA properties (for instance, either or both of repulsion resistance and cohesive strength), an amount of tackifier L used of 60 parts by mass or less is suitable, and in general, 50 parts by mass or less (for instance 45 parts by mass or less) is desirable.

As method for preparing a PSA composition (dispersion solution) containing an aqueous solvent, an acrylic polymer and a tackifier L, the method of adding the tackifier L to a water-dispersed acrylic polymer and mixing can be preferably adopted. In one preferred mode of the art disclosed herein, the tackifier L can be added in a morphology that substantially comprises only non-volatile components, without being intentionally diluted with an organic solvent or turned into a water dispersion solution (emulsion) beforehand. In this way, at least one effect may be realized among improvement of productivity of the PSA composition (and by extension the PSA sheet), alleviation of environmental load and forming of PSA sheets having better adhesive performance. When adding the tackifier L to the water-dispersed acrylic polymer, the tackifier L is preferably warmed and then added. In general, the extent of this heating is preferably 30°C or higher and more preferably 35°C or higher. This allows the water-dispersed acrylic polymer and the tackifier L to be mixed more readily and suitably. From such point of view as ease of manufacturing operation (for instance handleability), in general, a tackifier L temperature of 60°C or lower is suitable and 50°C or lower is desirable.

According to one preferred mode of the art disclosed herein, in addition to the tackifier L, the PSA composition further contains tackifier resin H having a softening point of 60°C or higher (and thus being in a solid state at 30°C). As such tackifier resins H, various tackifier resins that are general in the field of acrylic PSAs can be used, such as from the rosin series, terpene series, hydrocarbon series, epoxy series, polyamide series, phenol series and ketone series. As tackifier resins from the rosin series, non-modified rosins, modified rosins (hydrogenated rosins, disproportionated rosins, polymerized rosin and the like), esterification products thereof (rosin esters), unsaturated fatty acid-modified compounds, and the like, may be cited. Among these, those having a softening point of 80°C or higher (more preferably 100°C or higher, even more preferably 120°C or higher and particularly preferably 135°C or higher) may be adopted preferably as the tackifier resin H. According to such a tackifier resin H, a PSA sheet with a higher performance may be realized (at least one of repulsion resistance and cohesive strength is improved). The upper limit of the softening point of the tackifier resin H is not limited in particular, and for instance can be approximately 170°C or lower. Such a tackifier resin H can be used alone or by combining two or more species. According to one preferred mode, a tackifier resin of the rosin series is used as the tackifier resin H. A particularly satisfactory result may be realized by combining a rosin ester, a terpene phenol resin or an acrylic oligomer serving as the tackifier L, with a tackifier resin of the rosin series (for instance, polymerized rosin ester) H having a softening point of 135°C or higher.

Note that the softening point of the tackifier resin H referred to herein is defined as the value measured based on the softening point test method (ring-and-ball method) as established in JIS K 5902 and JIS K 2207. Concretely, a sample is melted promptly at an as-low-as-possible temperature and this is filled carefully into a ring placed on a flat metal plate so as not to form bubbles. After cooling, the bulging portion above the plane containing the top edge of the ring is cut away with a slightly heated small knife. Next, into a glass container (heating bath) of 85 mm or greater in diameter and 127 mm or greater in height, a support (ring stand) is introduced and glycerin is poured until the depth is 90 mm or greater. Next, a steel ball (9.5 mm in diameter and weighing 3.5 g) and the sample-filled ring are immersed into the glycerin so as not to come in contact with one another, and the temperature of glycerin is kept at 20°C plus/minus 5°C for 15 minutes. Next, a steel ball is placed on the surface of the sample in the ring at the center thereof, and this is placed at a given position on the support. Next, keeping the distance from the top edge of the ring to the glycerin surface at 50 mm, a thermometer is placed, the position of the center of the mercury ball of the thermometer is brought to the same height as the center of the ring, and the container is heated. The flame of the Bunsen burner used for heating is caused contact the bottom of the container in between the center and the border so that the heating is uniform. Note that, after 40°C has been reached from the beginning of the heating, the rate by which the bath temperature rises must be 5.0°C plus/minus 0.5°C per minute. When the sample gradually softens, flows down from the ring and finally comes into contact with the bottom plate, the temperature is read, which serves as the softening point. Two or more measurements of softening point are carried out simultaneously and the mean value thereof is adopted.

The amount of tackifier resin H used can be for instance 5 parts by mass or more with respect to 100 parts by mass of acrylic polymer, and in general, satisfactory effects are obtained with 10 parts by mass or more (for instance 15 parts by mass or more). From the point of view of balance with other PSA properties (for instance light pressure-bonding adhesiveness), an amount of tackifier resin used of 50 parts by mass or less is suitable, and in general, 40 parts by mass or less (for instance 30 parts by mass or less) is desirable. The tackifier resin H may be used preferably in the form of an aqueous emulsion comprising the resin dispersed in water. For instance, mixing a water dispersion solution of an acrylic polymer and an aqueous emulsion of tackifier resin H allows a PSA composition to be prepared readily, containing these with the desired proportions.

In the art disclosed herein, when using tackifier L and tackifier resin H in combination, the total amount thereof used can be for instance 10 parts by mass to 100 parts by mass with respect to 100 parts by mass of acrylic polymer, and in general 20 parts by mass to 75 parts by mass (for instance 30 parts by mass to 70 parts by mass) is suitable. The ratio of the amounts of tackifier L and tackifier resin H used (L:H) can be for instance 10:1 to 1:3 based on mass, and in general 5:1 to 1:2 (for instance3:1 to 1:1) is desirable.

The PSA composition may comprise, added as necessary to the water-dispersed acrylic polymer (subsequently added, that is to say, the crosslinking agent is added subsequently to the synthesis of the acrylic polymer), a general crosslinking agent, for instance, a crosslinking agent selected from a carbodiimide crosslinking agent, a hydrazine crosslinking agent, an epoxy crosslinking agent, an isocyanate crosslinking agent, an oxazoline crosslinking agent, an aziridine crosslinking agent, a metal chelate crosslinking agent, a silane coupling agent, and the like. Such crosslinking agents may be used alone or by combining two or more species. Alternatively, the PSA composition may be one for which a subsequent addition of such a crosslinking agent has not been carried out substantially. For instance, when an alkoxy silyl group-containing monomer has been co-polymerized in an acrylic polymer, a constitution may be adopted preferably, which does not use substantially a subsequently added crosslinking agent.

The PSA composition described above may contain, as necessary, an acid or a base (aqueous ammonia or the like) used for the purpose of pH adjustment or the like. As other optional constituents that may be included in the composition, various additives that are general in the field of aqueous PSA composition can be given as examples, such as viscosity adjuster, leveling agent, plasticizer, filler, colorant such as pigment and dye, stabilizer, antiseptic agent and anti-aging agent. Regarding such various additives, since conventionally well-known ones can be used via conventional methods and do not characterize in particular the present invention, detailed descriptions thereof will be omitted.

EXAMPLES

Hereafter, a number of examples according to the present invention will be described; however, the present invention is not intended to be limited to those indicated in examples. Note that in the following description, mass is the criteria for "part" and "%" unless expressly indicated otherwise.

<Example 1>

Into a reaction vessel equipped with a condenser, a nitrogen inlet tube, a thermometer and a stirrer, 40 parts of ion-exchanged water was introduced and stirred at 60°C for one hour or longer under nitrogen flow. Next, 0.1 parts of 2,2'-azobis[2-(5-methyl-2-imidazoline-2-yl)propane]dihydrochloride (polymerization initiator) was introduced into this reaction vessel and, while maintaining the system at 60°C, a monomer emulsion was added therein dropwise gradually over three hours to proceed with the emulsion polymerization reaction. As for the monomer emulsion, 70 parts of 2EHA, 30 parts of methyl acrylate, 1.5 parts of AA, 2.5 parts of MAA, 0.033 parts of n-lauryl mercaptan (chain transfer agent), 0.02 parts of 3-methacryloxypropyltrimethoxy silane (KBM-503, a product from Shin-Etsu Chemical Co., Ltd.) and 2 parts of sodium polyoxyethylene lauryl sulfate (emulsifier), added to 30 parts of ion exchanged water and emulsified was used. After the dropwise addition of the monomer emulsion was finished, the system was further maintained at 60°C for three hours, and then 0.2 parts of 35% hydrogen peroxide water and 0.6 parts of ascorbic acid were added. The system was cooled to ordinary temperature and then the pH was adjusted to 7 by the addition of 10% aqueous ammonia. In this manner, an acrylic polymer emulsion was obtained.

Serving as a tackifier resin, 20 parts based on solid contents of an aqueous emulsion of polymerized rosin ester having a softening point of 160°C (E-865 NT, a product from Arakawa Chemical Industries, Ltd.) per 100 parts of acrylic polymer contained in the emulsion was added to the acrylic polymer emulsion and mixed. In addition, 10% aqueous ammonia serving as a pH adjuster and polyacrylic acid serving as a thickener (Aron B-500, a product from Toagosei Co., Ltd.) were used suitably to prepare a PSA composition A0. Serving as a liquid tackifier, 40 parts based on solid contents of rosin ester having a hydroxyl group value of 96 mg KOH/g (KE-364E, a product from Arakawa Chemical Industries, Ltd.) was added to this PSA composition A0, and ion-exchanged water for viscosity adjustment use was suitably used to adjust the pH to 7.2 and the viscosity to 10 Pa·s. At this time, the PSA composition A0 and the liquid rosin ester were both pre-heated to 40°C and then mixed. In this manner, a PSA composition A1 according to the present example was obtained. The viscosity was measured using a B-type viscometer with the conditions: rotor No.5, rotation speed of 20 rpm, liquid temperature of 30°C and measurement time of 1 minute.

The PSA composition A1 was coated over a release liner having a release layer treated with a silicone release agent (75 EPS (M) Cream (Kai), a product from Oji Specialty Paper Co., Ltd.) and dried at 100°C for two minutes to form a PSA layer having a thickness of approximately 60 μm. Two sheets of this PSA-layered release liners were prepared, these PSA layers were respectively placed on each side of a non-woven fabric substrate (product name "SP genshi-14" from Daifuku Paper MGF Co., Ltd.) to produce a PSA sheet. Each adhesive side of this PSA sheet is protected as-is by the release liner used in producing the PSA sheet.

<Example 2>

In the present example, replacing KE-364E used in Example 1, 40 parts of a rosin ester having a hydroxyl group value of 116 mg KOH/g (KE-364C, a product from Arakawa Chemical Industries, Ltd.) was used as the liquid tackifier, and, similarly to KE-364E, this was heated to 40°C and added. A PSA sheet was prepared in a similar manner to Example 1 with respect to other points.

<Example 3>

In the present example, replacing KE-364E used in Example 1, 20 parts of a terpene phenol resin having a hydroxyl group value of 155 mg KOH/g (YP-90LL, a product from Yasuhara Chemical Co., Ltd.) was heated to 40°C and added as the liquid tackifier. A PSA sheet was prepared in a similar manner to Example 1 with respect to other points.

<Example 4>

In the present example, replacing KE-364E used in Example 1, 20 parts of acrylic oligomer having a hydroxyl group value of 126 mg KOH/g (UH2041, a product from Toagosei Co., Ltd.) was heated to 40°C and added as the liquid tackifier. A PSA sheet was prepared in a similar manner to Example 1 with respect to other points.

<Example 5>

In the present example, a PSA sheet was prepared in a similar manner to Example 1 except that no KE-364E was used.

<Example 6>

In the present example, replacing KE-364E used in Example 1, 40 parts of a hydrogenated rosin methyl ester having a hydroxyl group value of 10 mg KOH/g (M-HDR, a product from Maruzen Chemical Trading Co., Ltd.) was heated to 40°C and added as the liquid tackifier. A PSA sheet was prepared in a similar manner to Example 1 with respect to other points.

<Example 7>

In the present example, replacing KE-364E used in Example 1, 40 parts of a terpene phenol resin having a hydroxyl group value of 25 mg KOH/g (YS Polyster T30, a product from Yasuhara Chemical Co., Ltd.) was heated to 40°C and added as the liquid tackifier. A PSA sheet was prepared in a similar manner to Example 1 with respect to other points.

<Example 8>

In the present example, replacing KE-364E used in Example 1, 40 parts of a xylene resin having a hydroxyl group value of 25 mg KOH/g (Nikanol H80, a product from Fudow Co., Ltd.) was heated to 40°C and added as the liquid tackifier. A PSA sheet was prepared in a similar manner to Example 1 with respect to other points.

<Example 9>

In the present example, replacing KE-364E used in Example 1, 20 parts of an acrylic oligomer having a hydroxyl group value of 20 mg KOH/g (UH2000, a product from Toagosei Co., Ltd.) was heated to 40°C and added as the liquid tackifier. A PSA sheet was prepared in a similar manner to Example 1 with respect to other points.

<Example 10>

In the present example, replacing KE-364E used in Example 1, 20 parts of an acrylic oligomer having a hydroxyl group value of substantially 0 mg KOH/g (UH2000, a product from Toagosei Co., Ltd.) was heated to 40°C and added as the liquid tackifier. A PSA sheet was prepared in a similar manner to Example 1 with respect to other points.

<Example 11>

In the present example, replacing KE-364E and E-865 NT used in Example 1, 20 parts of a terpene phenol resin having a softening point of 125°C and a hydroxyl group value of 200 mg KOH/g (Mighty Ace K125, a product from Yasuhara Chemical Co., Ltd.) was diluted to 50% in ethyl acetate and added. A PSA sheet was prepared in a similar manner to Example 1 with respect to other points.

<Example 12>

In the present example, replacing KE-364E and E-865 NT used in Example 1, 20 parts of a terpene phenol resin having a softening point of 125°C and a hydroxyl group value of 140 mg KOH/g (Mighty Ace G125, a product from Yasuhara Chemical Co., Ltd.) was diluted to 50% in ethyl acetate and added. A PSA sheet was prepared in a similar manner to Example 1 with respect to other points.

<Example 13>

In the present example, replacing KE-364E and E-865 NT used in Example 1, 30 parts of a rosin resin for which the softening point was 120°C and the hydroxyl group value was substantially 0 mg KOH/g (Super Ester NS-121, a product from Arakawa Chemical Industries, Ltd.) was diluted to 50% in ethyl acetate and added. A PSA sheet was prepared in a similar manner to Example 1 with respect to other points.

Shown in Table 1 are the physical properties and amount added of the liquid tackifier used in the preparation of the PSA sheets according to each example above. Regarding Example 11 to Example 13, for the tackifier resins used in lieu of the liquid tackifiers, the softening point (listed in the quality column), the hydroxyl group value and the amount added thereof are indicated in the table.

[Table 1]

| | Species | Quality | Hydroxyl group value (mg KOH/g) | Viscosity (Pa·s) | Amount added (parts) |
|---|---|---|---|---|---|
| Example 1 | Rosin ester | Liquid form | 96 | 805 | 40 |
| Example 2 | Rosin ester | Liquid form | 116 | 140 | 40 |
| Example 3 | Terpene phenol resin | Liquid form | 155 | 70 | 20 |
| Example 4 | Acrylic oligomer | Liquid form | 126 | 10 | 20 |
| Example 5 | None | -- | -- | -- | -- |
| Example 6 | Hydrogenated rosin methyl ester | Liquid form | 10 | <10 | 40 |
| Example 7 | Terpene phenol resin | Liquid form | 25 | >2000 | 40 |
| Example 8 | Xylene resin | Liquid form | 25 | <10 | 40 |
| Example 9 | Acrylic oligomer | Liquid form | 20 | <10 | 20 |
| Example 10 | Acrylic oligomer | Liquid form | 0 | <10 | 20 |

(continued)

|  | Species | Quality | Hydroxyl group value (mg KOH/g) | Viscosity (Pa·s) | Amount added (parts) |
|---|---|---|---|---|---|
| Example 11 | None (terpene phenol resin) | (125°C) | (200) | -- | (20) |
| Example 12 | None (terpene phenol resin) | (125°C) | (140) | -- | (20) |
| Example 13 | None (rosin resin) | (120°C) | (0) | -- | (30) |

<Measurement of light pressure-bonding adhesive strength to urethane foam>

A flexible urethane foam (ECS (gray), a product from Inoac Corporation) of 10 mm in thickness cut into a size of 30 mm in width and 100 mm in length was prepared to serve as an adherend. As shown in Fig. 7, on both sides in the width direction of this urethane foam (ECS foam) 42, 5 mm-thick ABS members (jigs for the purpose of controlling the thickness when the urethane foam is compressed; two 2.5 mm-thick ABS plates were stacked and used as 5 mm-thick jigs) 44 and 45 were placed by leaving approximately 0.1 mm gaps respectively.

Under an environment of 23°C, the release liner covering a first adhesive surface of each PSA sheet prepared according to Examples 1 to 13 was peeled off and a 25 μm-thick polyethylene terephthalate (PET) film was adhered to the exposed adhesive surface for backing. This backed PSA sheet cut into a size of 20 mm in width and 100 mm in length served as a sample strip. The release liner covering a second adhesive surface of the sample strip was peeled off up to a position of approximately 2/3 from one end in the length direction of the sample strip. As shown in Fig. 8, with the adhesive surface 40B thusly exposed facing down, a sample strip 40 was placed atop the urethane foam 42 and pressure-bonded by causing a roller 46 weighing 2 kg and having a diameter 85 mm to travel once back and forth in the length direction of this sample strip 40 at a speed of 30 cm/minute. At this time, the roller 46 was rolled along the top side of the jigs 44 and 45 while compressing the urethane foam 42.

In this way, that is to say, pressure-bonded to urethane foam by a bonding surface area of 20 mm in width and approximately 100 mm in length, a sample strip was stored at 23°C for 30 minutes, and then, 180° peel adhesive strength was measured using a tensile tester in a measurement environment of 23°C and 50% RH, at a pull speed of 300 mm/minute, in accordance with JIS Z 0237 (2004). The measurement length was at least 10 mm or greater. Respectively three sample strips were prepared from the PSA sheet prepared according to each example, and from the results of three measurements using these, the mean value was calculated.

<Repulsion resistance test>

Under an environment of 23°C, the release liner covering a first adhesive surface of each PSA sheet was peeled off, the exposed adhesive surface was placed atop a flexible urethane foam (ECS (gray), a product from Inoac Corporation) of 10 mm in thickness and pressure-bonded by causing a roller weighing 5 kg (equivalent to 0.05 MPa) to travel once back and forth in the length direction of the sample strip. This was cut to a width of 10 mm and a length of 50 mm to prepare a sample strip.

As shown in Fig. 9, release liner was peeled off from a second adhesive surface of this sample strip 50, a portion of the thusly exposed adhesive surface from one end 50A in the length direction up to 10 mm (that is to say, an adhesive surface area of 10 mm in width and 10 mm in length) was pressure-bonded to an outer edge on a first side 52A of a 2 mm-thick ABS plate 52 by causing a roller weighing 2 kg and having a diameter of 95 mm to travel back and forth once at a speed of approximately 30 cm/minute. Next, as shown in Fig. 10, the remaining portion of the sample strip 50 was folded and bonded from an end of the ABS plate 52 over to a second side 52B thereof. This was stored for 24 hours under an environment of 23°C and 50% RH and for a further two hours under an environment of 70°C, then, lift distance of the one end 50A of the sample strip 50 was measured. Respectively three sample strips were prepared from the PSA sheet prepared according to each example, and the mean value of the lift distances of these sample strips was calculated.

In Fig. 10, numeral 502 represents a PSA sheet and numeral 504 represents a urethane foam pressure-bonded to a first adhesive surface of the PSA sheet.

<Cohesive strength test>

In a 23°C environment, the release liner covering a first adhesive surface of each PSA sheet was peeled off and a 25 μm-thick PET film was adhered onto the exposed adhesive surface for backing. This backed PSA sheet was cut to 10 mm width to produce respectively three sample strips from the PSA sheet according to each example. The release liner was peeled off from a second adhesive surface of these sample strips, the thusly exposed adhesive surface was bonded to a phenol resin plate serving as an adherend, in a 10mm-wide, 20mm-long adhesive surface area. This was left in a 23°C environment for 30 minutes, then, the phenol resin plate was hung and a 500 g load was added to the free end of the sample strip. In accordance with JIS Z 0237 (2004), the sample strip was left in a state with the load added in a 23 °C environment for one hour. The sample strip shift distance (mm) from the initial bonding position was measured. After one hour had elapsed, if even one sample strip among the three sample strips was dropped, the retention time was determined to be less than one hour (indicated by "dropped" in Table 2). Otherwise, the sample strip shift distance (mm) from the initial bonding position was measured respectively for the three sample strips and the mean value thereof was calculated.

<Measurement of SUS adhesive strength>

Under an environment of 23°C, the release liner covering a first adhesive surface of each PSA sheet was peeled off and a 25 μm-thick PET film was adhered to the exposed adhesive surface for backing. This backed PSA sheet cut into a size of 20 mm in width and 100 mm in length served as a sample strip. The release liner covering a second adhesive surface of the sample strip was peeled off, the adhesive surface thusly exposed was pressure-bonded to a stainless (SUS 304) plate serving as the adherend by causing a 2kg roller to travel back and forth once. This was stored at 23°C for 30 minutes, and then, 180° peel adhesive strength was measured using a tensile tester in a measurement environment of 23°C and 50% RH, at a pull speed of 300 mm/minute, in accordance with JIS Z 0237 (2004). Three sample strips were prepared from the PSA sheet prepared according to each example, and from the results of three measurements using these sample strips, the mean value was calculated.

<Measurement of PP adhesive strength>

In a similar manner to the measurement of SUS adhesive strength except that a polypropylene (PP) plate was used as the adherend, 180° peel adhesive strength was measured. Three sample strips were prepared from the PSA sheet prepared according to each example, and from the results of three measurements using these sample strips, the mean value was calculated.

The obtained results are shown in Table 2. In the table, ">10 mm" in the repulsion resistance test results corresponds to a situation where, of the sample strip 50, the portion bonded to the surface 52A of the ABS plate has lifted almost completely from the surface, forming an angle that is greater than 90° with the portion bonded to the surface 52B of the ABS plate.

[Table 2]

|  | Light pressure-bonding adhesive strength (N/ 20 mm) | Repulsion resistance (mm) | Cohesive strength (mm) | SUS adhesive strength (N/20 mm) | PP adhesive strength (N/20 mm) |
|---|---|---|---|---|---|
| Example 1 | 3 | 0 | 1 | 15 | 14 |
| Example 2 | 3 | 0 | 1 | 15 | 16 |
| Example 3 | 3 | 0 | 1 | 15 | 15 |
| Example 4 | 2 | 0 | 1 | 10 | 9 |
| Example 5 | 0.1 | 4 | 1 | 11 | 9 |
| Example 6 | 1 | 0 | 1 | 10 | 11 |

(continued)

|  | Light pressure-bonding adhesive strength (N/ 20 mm) | Repulsion resistance (mm) | Cohesive strength (mm) | SUS adhesive strength (N/20 mm) | PP adhesive strength (N/20 mm) |
|---|---|---|---|---|---|
| Example 7 | 1 | 0 | 1 | 11 | 8 |
| Example 8 | 1 | 0 | 1 | 12 | 13 |
| Example 9 | 1 | >10 | 1 | 9 | 9 |
| Example 10 | 0.4 | >10 | 1 | 8 | 8 |
| Example 11 | 0.4 | >10 | 1 | 17 | 6 |
| Example 12 | 0.4 | >10 | 1 | 18 | 6 |
| Example 13 | 0.6 | >10 | 1 | 17 | 10 |

As shown in Table 2, the PSA sheets according to Examples 1 to 4 all demonstrated light pressure-bonding adhesive strengths exceeding 1.5 N/20 mm and also had excellent anti-resiliencies. Examples 1 to 3, in which a rosin ester or a terpene phenol resin was used as tackifier L, the light pressure-bonding adhesive strengths and SUS/PP adhesive strengths were particularly satisfactory. Among them, according to Example 3, in which a liquid terpene phenol resin having a hydroxyl group value of 100 mg KOH/g or greater (more specifically, 150 mg KOH/g or greater) was used, light pressure-bonding adhesive strength and cohesive strength could be provided at higher levels.

In contrast, with Example 5, which had the tackifier L removed from Examples 1 to 4, the light pressure-bonding adhesive strength was significantly decreased and the repulsion resistance was also decreased, compared to Examples 1 to 4. For all of Examples 6 to 10, in which liquid tackifiers having hydroxyl group values of less than 50 mg KOH/g were used, only light pressure-bonding adhesive strengths that were on the order of 1/2 to 1/3 compared to Examples 1 to 4 could be obtained. In addition, with Example 11 and 12, in which solid tackifier resins were used, only low light pressure-bonding adhesive strength to a similar extent to Example 13, in which a tackifier resin having a hydroxyl group value of approximately 0 mg KOH/g was used, could be obtained, and repulsion resistance was also inadequate, regardless of the fact that these tackifier resins have hydroxyl group values that are equivalent to or greater than those in Examples 3 and 4.

**Claims**

1.  A pressure-sensitive adhesive sheet having a pressure-sensitive adhesive layer formed from an aqueous pressure-sensitive adhesive composition,
    the pressure-sensitive adhesive composition being a dispersion solution containing an aqueous solvent and an acrylic polymer dispersed in the aqueous solvent, and
    the pressure-sensitive adhesive sheet satisfying the following property:

    (A) when pressure-bonded to a flexible urethane foam of 10 mm in thickness under conditions where the urethane foam is compressed to a thickness of 5 mm, the 180° peel adhesive strength 30 minutes after the pressure-bonding is 1.5 N/20 mm or greater; here, a polyether urethane foam with a density of 22 ± 2 kg.m3 and a hardness (by the D method defined in JIS K6400-2 (2004)) of 107.9 ± 22.6 N as further detailed herein is used as the flexible urethane foam;

    wherein the pressure-sensitive adhesive composition further contains a tackifier L in an amount of 5 parts by mass or more with respect to 100 parts by mass of the acrylic polymer satisfying the following properties:

(p) the viscosity at 30°C is 2000 Pa·s or lower; and
(q) the hydroxyl group value is 50 mg KOH/g or greater.

**2.** The pressure-sensitive adhesive sheet according to claim 1, wherein the pressure-sensitive adhesive composition further contains a tackifier resin H having a softening point of 60°C or higher.

**3.** A method for preparing the pressure-sensitive adhesive composition for producing the pressure-sensitive adhesive sheet according to claim 1, comprising the steps of:

preparing a dispersion solution in which an acrylic polymer is dispersed in an aqueous solvent; and
mixing the tackifier L into the dispersion solution.

**4.** A method for preparing a pressure-sensitive adhesive composition comprising a dispersion solution containing an aqueous solvent and an acrylic polymer dispersed in the aqueous solvent, comprising the steps of:

preparing a dispersion solution in which an acrylic polymer is dispersed in the aqueous solvent; and
mixing into the dispersion solution a tackifier L satisfying the following properties:

(p) the viscosity at 30°C is 2000 Pa·s or lower; and
(q) the hydroxyl group value is 50 mg KOH/g or greater,

wherein the adhesive composition comprises tackifier L in an amount of from 5 parts by mass or more with respect to 100 parts by mass of the acrylic polymer.

**5.** The method according to claim 4, wherein when mixing the tackifier L into the dispersion solution, the tackifier L whose temperature is 35°C or higher is added to the dispersion solution.

**Patentansprüche**

**1.** Haftklebefolie mit einer Haftklebstoffschicht, die aus einer wässrigen Haftklebstoffzusammensetzung gebildet ist, wobei die Haftklebstoffzusammensetzung eine Dispersionslösung ist, die ein wässriges Lösungsmittel und ein in dem wässrigen Lösungsmittel dispergiertes Acrylpolymer enthält, und
wobei die Haftklebefolie die folgende Eigenschaft aufweist:

(A) wenn sie auf einen flexiblen Urethanschaum mit einer Dicke von 10 mm unter Bedingungen druckverklebt wird, bei denen der Urethanschaum auf eine Dicke von 5 mm zusammengedrückt wird, ist die 180°-Schälhaftfestigkeit 30 Minuten nach dem Druckverkleben 1,5 N/20 mm oder größer; hier wird ein Polyetherurethanschaum mit einer Dichte von $22 \pm 2$ kg•m$^3$ und einer Härte (gemäß dem in JIS K6400-2 (2004) definierten Verfahren D) von $107,9 \pm 22,6$ N, wie er hierin in näheren Einzelheiten beschrieben ist, als der flexible Urethanschaum verwendet;

wobei die Haftklebstoffzusammensetzung außerdem einen Klebrigmacher L in einer Menge von 5 Masseteilen oder mehr, bezogen auf 100 Masseteile des Acrylpolymers, enthält, der die folgenden Eigenschaften aufweist:

(p) die Viskosität bei 30 °C ist 2000 Pa•s oder niedriger; und
(q) die Hydroxylzahl ist 50 mg KOH/g oder größer.

**2.** Haftklebefolie gemäß Anspruch 1, wobei die Haftklebstoffzusammensetzung außerdem ein Klebrigmacherharz H mit einem Erweichungspunkt von 60 °C oder höher enthält.

**3.** Verfahren zum Herstellen der Haftklebstoffzusammensetzung zum Herstellen der Haftklebefolie gemäß Anspruch 1, umfassend die Schritte:

Herstellen einer Dispersionslösung, in welcher ein Acrylpolymer in einem wässrigen Lösungsmittel dispergiert ist; und
Hineinmischen des Klebrigmachers L in die Dispersionslösung.

**4.** Verfahren zum Herstellen einer Haftklebstoffzusammensetzung umfassend eine Dispersionslösung, die ein wässriges Lösungsmittel und ein in dem wässrigen Lösungsmittel dispergiertes Acrylpolymer enthält, umfassend die Schritte:

Herstellen einer Dispersionslösung, in welcher ein Acrylpolymer in dem wässrigen Lösungsmittel dispergiert ist; und
Hineinmischen eines Klebrigmachers L in die Dispersionslösung, der die folgenden Eigenschaften aufweist:

(p) die Viskosität bei 30 °C ist 2000 Pa•s oder niedriger; und
(q) die Hydroxylzahl ist 50 mg KOH/g oder größer,

wobei die Klebstoffzusammensetzung den Klebrigmacher L in einer Menge von 5 Masseteilen oder mehr, bezogen auf 100 Masseteile des Acrylpolymers, umfasst.

**5.** Verfahren gemäß Anspruch 4, wobei, wenn der Klebrigmacher L in die Dispersionslösung hineingemischt wird, der Klebrigmacher L, dessen Temperatur 35 °C oder höher ist, zu der Dispersionslösung hinzugefügt wird.

## Revendications

**1.** Feuille adhésive sensible à la pression comportant une couche d'adhésif sensible à la pression formée à partir d'une composition d'adhésif sensible à la pression aqueuse,
la composition d'adhésif sensible à la pression étant une solution de dispersion contenant un solvant aqueux et un polymère acrylique dispersé dans le solvant aqueux, et
la feuille adhésive sensible à la pression satisfaisant la propriété suivante :

(A) lors d'une liaison par pression sur une mousse d'uréthane souple d'épaisseur 10 mm dans des conditions où la mousse d'uréthane est comprimée à une épaisseur de 5 mm, la résistance adhésive au pelage à 180° 30 minutes après liaison par pression est de 1,5 N/20 mm ou plus ; ici, une mousse de polyéther uréthane avec une masse volumique de 22 $\pm$ 2 kg/m3 et une dureté (suivant la méthode D définie dans la JIS K6400-2 (2004)) de 107,9 $\pm$ 22,6 N ainsi que présenté plus en détail dans la description est employée en tant que mousse d'uréthane souple ;

la composition d'adhésif sensible à la pression comprenant en outre un agent collant L en une quantité de 5 parties en masse ou plus pour 100 parties en masse du polymère acrylique satisfaisant les propriétés suivantes :

(p) la viscosité à 30 °C est de 2000 Pa•s ou moins ; et
(q) l'indice d'hydroxyle est de 50 mg KOH/g ou plus.

**2.** Feuille adhésive sensible à la pression selon la revendication 1, la composition d'adhésif sensible à la pression contenant en outre une résine collante H ayant un point de ramollissement de 60 °C ou plus.

**3.** Procédé de fabrication de la composition d'adhésif sensible à la pression pour produire la feuille adhésive sensible à la pression selon la revendication 1, comprenant les étapes consistant à :

préparer une solution de dispersion dans laquelle un polymère acrylique est dispersé dans un solvant aqueux ; et
mélanger l'agent collant L dans la solution de dispersion.

**4.** Procédé de fabrication d'une composition d'adhésif sensible à la pression comprenant une solution de dispersion contenant un solvant aqueux et un polymère acrylique dispersé dans le solvant aqueux, comprenant les étapes consistant à :

préparer une solution de dispersion dans laquelle un polymère acrylique est dispersé dans le solvant aqueux ; et
mélanger dans la solution de dispersion un agent collant L satisfaisant les propriétés suivantes :

(p) la viscosité à 30 °C est de 2000 Pa•s ou moins ; et
(q) l'indice d'hydroxyle est de 50 mg KOH/g ou plus,

la composition d'adhésif comprenant l'agent collant L en une quantité de 5 parties en masse ou plus pour 100 parties en masse du polymère acrylique.

5. Procédé selon la revendication 4, où lors du mélange de l'agent collant L dans la solution de dispersion, l'agent collant L dont la température est de 35 °C ou plus est ajouté à la solution de dispersion.

[Fig 1]

1

| 32 |
| 22 |
| 10 |
| 21 |
| 31 |

[Fig 2]

2

| 22 |
| 10 |
| 21 |
| 31 |

[Fig 3]

3

21B — 32
21 — 21
21A — 31

[Fig 4]

4

21B — 21
21A — 31

[Fig 5]

5

21A — 31
10A — 21
10

[Fig 6]

[Fig 7]

[Fig 8]

[Fig 9]

[Fig 10]

504  ⎫
502  ⎬ 50

50A

52A

52B

52

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010247771 A
- JP 2006348143 A
- JP 2007084781 A
- JP 2008115315 A

**Non-patent literature cited in the description**

- Handbook of Pressure-Sensitive Adhesive Technology. The Nikkan Kogyo Shimbun, Ltd,
- Polymer Handbook. Wiley-Interscience